# EUROPEAN PATENT APPLICATION

(11) **EP 1 000 777 A2**
(43) Date of publication of application: **17.05.2000**
(21) Application number: 99203794.5
(22) Date of filing: 15.11.1999
(51) Int. Cl.: B60C 29/00, B60C 23/16, B60C 23/00

(54) **Tyre and pressure change system with such a tyre**

(30) Priority: 16.11.1998 NL 1010560; 19.04.1999 NL 1011831
(71) Applicant: Dijk, Gerrit Jan, 8131 PW Wijhe (NL)
(72) Inventor: Dijk, Gerrit Jan, 8131 PW Wijhe (NL)

(57) **Abstract**

Pressure change system for a vehicle, for example a tractor, by which the pressure in the back tyres can be reduced if the vehicle is used on a field and can be increased if the vehicle is driven on a metalled road. According to the invention, a tyre (1) is provided with an inner tyre (2) which can be inflated and which assumes then a predefined maximum volume, such that no contact is made with the tyre. The tyre is inflated by guiding air from the inner tyre into the space between the inner tyre and the tyre.

## Description

The invention relates to an inner tyre for a wheel of a vehicle, with a tyre mounted onto a rim in which the inner tyre can be accommodated. More particularly the inner tyre is intended for use in a vehicle provided with a pressure change system. Vehicles with a pressure change system find application in for example the agricultural sector, where the tyre must be pressurized to a relatively high pressure if the vehicle drives along a metalled road, while the tyre should be pressurized to a relatively low pressure if the vehicle drives along farmland or grassland. Pressure change systems are also used for military vehicles under comparable circumstances.

With vehicles of the type as described above, big to very big wheels are used, provided with tubeless tyres, to which a considerable amount of air must be supplied or from which a large amount of air must be deflated during a pressure change. The invention aims at reducing the amount of air by creating a volume in the inner tyre in which the pressure remains constant during a pressure change and is characterized in that the inner tyre is provided with reinforcement, such that it can at least substantially not exceed a predefined maximum volume and that under operational conditions it at least substantially does not contact the tyre. Thereby the tyre provides the necessary bearing capacity, while the inner tyre, inflated at a high pressure, does not negatively influence the driving characteristics. Moreover, the inner tyre prevents damage to the rim if one drives across an obstacle with a soft tyre.

A favourable embodiment of the inventive inner tyre, for which a rubber inner tyre well known in the art may be taken as a starting point, is characterized in that the reinforcement comprises fibres, running radially and/or crosswise along the outer circumference of the inner tyre, for example synthetic fibres. In this way, a light and very strong inner tyre is obtained which can withstand a pressure of at least 6 bar without being supported by an outer tyre.

A very favourable embodiment of the inventive inner tyre is characterized in that the inner tyre comprises a piece of pressure resistant tubing, the ends of which are connected to each other and/or to the rim. The advantage is that one type of tubing, for example the type used by fire brigades, may in principle be used for making a suitable inner tyre for tyres of any size by cutting an appropriate piece off the tubing and by next coupling the ends, for example by gluing one end into the other. Before doing so, one can make an opening in the tubing in which a connecting valve can be glued, as is usual in the production of an inner tyre. It is also possible to mount both ends on two opposite ends of a T-piece, in which case the third end of the T-piece forms the connecting valve, or to make a junction on the rim to which both ends are coupled, which junction then also forms a connecting valve in an obvious manner.

The invention also relates to a pressure change system for a vehicle provided with at least one wheel, comprising at least one tyre mounted onto a rim and means for adjusting a pressure in the tyre. Pressure change systems of this type are known in the art. Usually the pressure in the tyre is regulated via a hollow axle on which the wheel is mounted. The disadvantage is that this hollow axle construction is expensive and is practically impossible to fit into existing vehicles. Due to the high costs, the known pressure change systems find an application substantially exclusively in military vehicles, where costs are less important.

The inventive pressure change system does not demand special provisions on the vehicle can be easily mounted afterwards. It becomes possible then to equip agricultural vehicles and off-the-road cars with a pressure change system, which is advantageous as the pressure in the tyre is preferably high when driving on a road for obtaining favourable driving characteristics and in order to prevent wear of the tyres, while when driving on a field the pressure in the tyre is preferably low for obtaining a sufficient tractive force and for preventing a compression of the soil. The inventive pressure change system is characterized in that the means comprise an inner tyre, mounted onto the rim, a first valve for enabling a gas to deflate from the tyre and a second valve for enabling a flow of gas from the inner tyre to the tyre, that the inner tyre is provided with a reinforcement, such that it can at least substantially not exceed a predefined maximum volume and that under operational conditions it at least substantially does not contact the tyre. The tyre may in this case be a common tubeless tyre in which the inner tyre placed in fact without supporting the tyre. According to the invention, the inner tyre functions as a buffer vessel from which the tyre, if necessary, is inflated by opening the second valve, and it reduces the actual volume in which the pressure is to be changed.

The volume of the inner tyre compared to the volume of the tyre is always a compromise. If one selects the volume of the inner tyre to be relatively large then a large amount of air under a high pressure is available and the volume to be changed is only small, which implies that the pressure can be changed a number of times without connecting a pump to the system. The disadvantage of a large volume is that it reduces the resilience of the tyre, which may lead to a reduced equalization of the pressure of the tread to the soil and to unwanted friction between the inner tyre and the tyre. A favourable realization is therefore characterized in that the maximum volume of the inner tyre amounts to 30-70% of the internal volume of the tyre.

In situations in which the pressure must be changed many times, the supply of air in the inner tyre is normally insufficient. A favourable embodiment, which solves the problem for these situations, is according to another aspect of the invention characterized in that the pressure change system moreover comprises pump means, for pressurizing the inner tyre to a predefined pressure.

A very favourable embodiment according to another aspect of the invention is characterized in that the pressure change system moreover comprises a vessel, attached to the rim, that the first valve is arranged for deflating the gas into the vessel and that the pump means are arranged for pumping the gas from the vessel into the inner tyre. Because the pressure in the vessel normally is higher than the pressure of the surrounding air, a significant amount of energy can be saved while inflating the inner tyre.

A further favourable embodiment is characterized in that the pump means comprise a plunger pump, connected to the wheel. Preferably, at least one projection is provided then, mounted near the wheel, for driving the pump means under operational conditions by pressing-in a plunger rod of the pump at least one time per revolution of the wheel.

The invention also relates to a wheel or an inner tyre, suitable for use in a pressure change system according to the invention.

The invention will now be explained in more detail with reference to the following figures, in which:
- Fig. 1: schematically represents in cross-section a tyre and an inner tyre according to the invention;
- Fig. 2: schematically represents a possible embodiment of a pressure change system;
- Fig. 3: schematically represents a possible embodiment of a pressure change system with integrated pump;
- Fig. 4: schematically represents in cross-section a tyre, an inner tyre and a vessel according to the invention;
- Fig. 5: schematically represents a possible embodiment of a pressure change system with integrated pump and vessel.

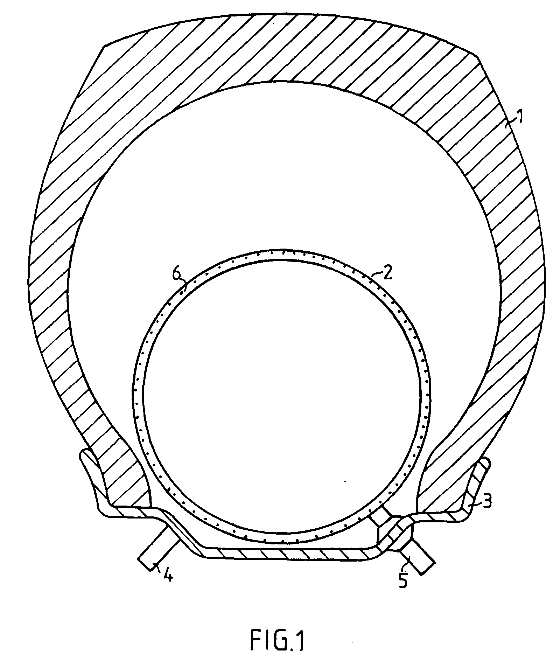

Fig. 1 schematically represents in cross-section a tyre 1 and an inner tyre 2 according to the invention, mounted onto a rim 3. Tyre 1 can be an ordinary tubeless tyre. Instead of a valve, tyre 1 provided with a connecting nipple 4, for connecting it to a pressure change system. Inner tyre 2 is provided with a connecting nipple 5 and is made such that it shows substantially no stretch, which implies that during inflation it will reach a maximum volume, after which the pressure in inner tyre 2 will increase while the volume remains at least substantially the same. For that purpose, inner tyre 2 is provided with reinforcement, for example in the form of aramide fibres 6, fixed in or around inner tyre 2.

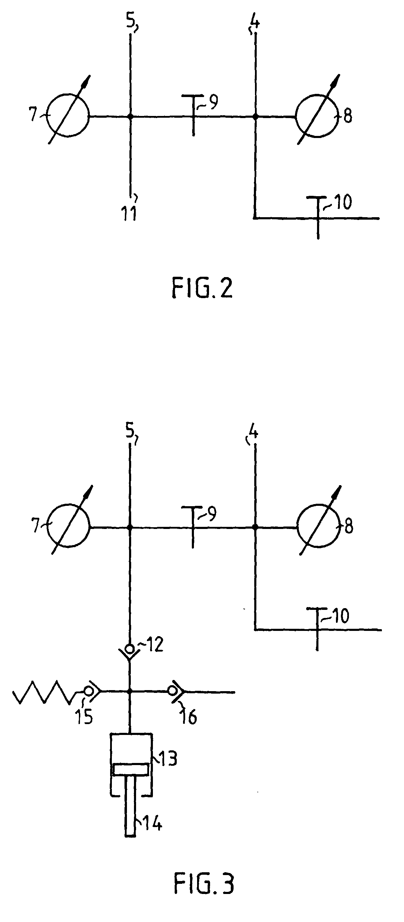

Fig. 2 schematically represents a possible embodiment of a pressure change system, comprising a system of pipes to which tyre 1 is connected via connecting nipple 4 and inner tyre 2 via connecting nipple 5, two pressure gauges 7,8, two valves 9,10 and a valve 11. Via valve 11, tyre 1 and inner tyre 2 are inflated, for example to a pressure of 2 bar, which pressure can be read on one of the pressure gauges 7,8. In this situation valve 9 is in an open position and valve 10 is in a closed position. Next valve 9 is closed and inner tyre 2 is inflated to a pressure of for example 6 bar, which pressure can be read on pressure gauge 7. The air pump is for example situated at a farm or in a garage. The vehicle is now ready for a ride on a metalled road to a field. As soon as the vehicle reaches for example a field to be cultivated, valve 10 is opened during a short time, until pressure gauge 8 indicates a desired pressure of for example 1 bar.

Before the vehicle leaves the field in order to continue its ride on the metalled road, valve 9 is opened during a short time, until pressure gauge 8 indicates a desired pressure of for example 2 bar.

After one pressure change cycle, the pressure in inner tyre 2 has decreased. With a favourable choice of the volume of inner tyre 2 compared to tyre 1 and by choosing the initial pressure of inner Lyre 2 sufficiently high, it will usually be possible to execute a number of cycles before inner tyre 2 has to be inflated again. If one chooses for example the volume of inner tyre 2 half the volume of tyre 1, than four pressure change cycles can be executed with the given parameters.

Fig. 3 schematically represents a possible embodiment of a pressure change system with an integrated pump, in which connecting nipple 5 is connected via a one way valve 12 to a pump 13, arranged to maintain the pressure in inner tyre 2 at a fixed, predetermined value. Pump 13 is mounted in a fixed position on rim 3, in such a way that for every revolution of rim 3 a plunger rod 14 contacts a projection, not shown in the figure, mounted onto the vehicle. Pumps of this type are known in the art, for example from EP-A-0 166 123. It should be noted, however, that the known pump is arranged to deliver large volumes of air, as with this air a tyre should be inflated within a short time span. In the present system, the pump can be much smaller thanks to the buffering action of inner tyre 2. In order to prevent the pressure in inner tyre 2 from becoming too high, pump 13 can moreover be provided with an overpressure valve 15, as such known in the art. Finally, pump 13 may be provided with an inlet valve 16, as such known in the art, by which air can be sucked in. Of course it is also possible to replace overpressure valve 15 by for example a press cylinder, arranged so as to push plunger rod 14 aside and away from the projection at a predefined pressure in order to interrupt the pumping action, or by another known provision for that purpose as soon as the predefined pressure is reached.

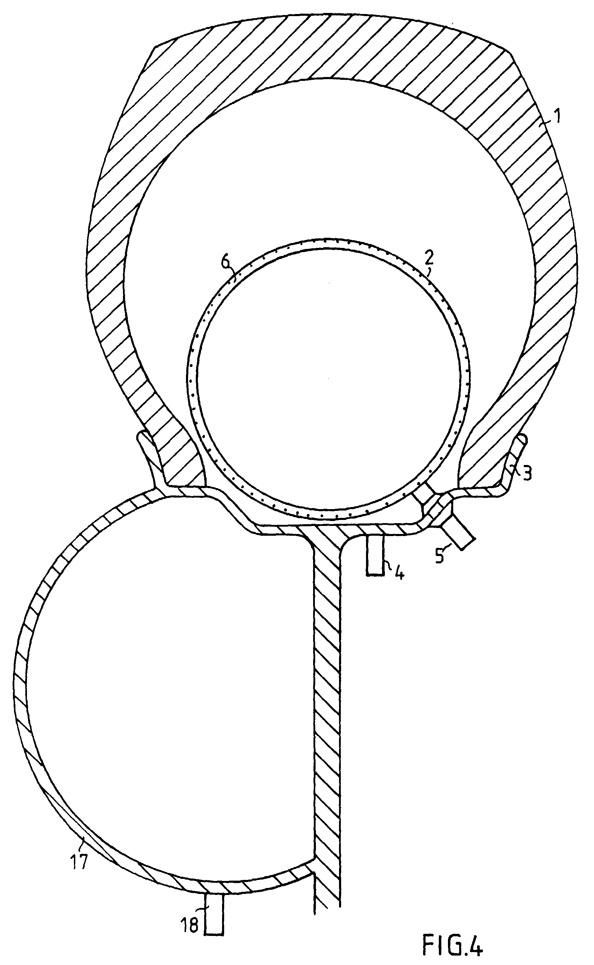

Fig. 4 schematically represents in cross-section a tyre 1 and an inner tyre 2, mounted on a rim 3, and a toroidally shaped buffer vessel 17, welded onto rim 3. According to the invention, the pressure change system is operated such that air, escaping from tyre 1 via connecting nipple 4 is released, via a connecting nipple 18, in buffer vessel 17. While the vehicle is cultivating a field, air is pumped from buffer vessel 17, via connecting nipple 18, a pump and connecting nipple 5 into inner tyre 2, which action takes relatively little energy because of the relatively high pressure in buffer vessel 17. When the vehicle is about to turn into a metalled road, tyre 1 can be inflated from inner tyre 2, in the same manner as explained with reference to Fig. 1.

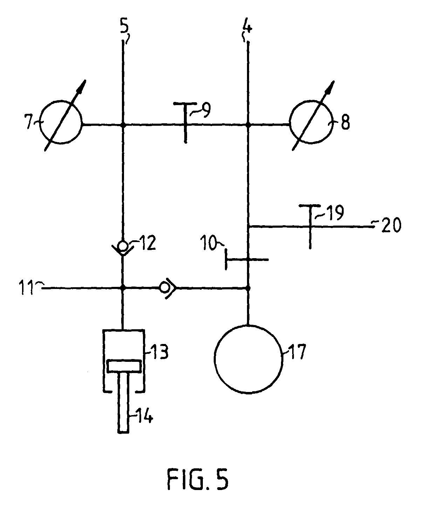

Fig. 5 schematically shows a possible embodiment of a pressure change system with an integrated plunger pump 13 and a buffer vessel 17, with the connecting nipple 5 of inner tyre 2 connected to pump 13 via a one-way valve 12. Pump 13 pumps air from buffer vessel 17 via inlet valve 16 to inner tyre 2. With well-chosen dimensions of buffer vessel 17 the pressure in inner tyre 2 can never become too high, which makes an overpressure valve superfluous. An additional advantage of a buffer vessel 17 is that the pumping action automatically stops as soon as an underpressure develops in it, because the plunger of plunger pump 13 will be kept in a retracted position and the plunger rod will no longer periodically contact the projection situated next to the wheel.

The pressure change system needs, at least in principle, only once be provided with compressed air via valve 11. First tyre 1 is inflated to a pressure of for example 2 bar with valve 9 in an open position and valve 10 and 19 in a closed position. Next valve 9 is closed and inner tyre 2 is inflated to a higher pressure, for example 4 bar. The pressure in tyre 1 can be reduced by opening valve 10 during a short time, during which opening air flows from tyre 1 into buffer vessel 17. Pump 13 will then pump the air from buffer vessel 17 into inner tyre 2, via inlet valve 16 and one way-valve 12. The pressure in tyre 1 may be increased at any moment by opening valve 9 during a short time. Thus, a pressure change is executed by controlling the valves 9,10, while the actual pressures can constantly be monitored with the aid of pressure gauges 7,8. Finally, a valve 19 is provided together with an air outlet 20 in order to drain the pressure change system for maintenance purposes for example.

Valves 9,10 may be of a hand-operated type but they may also be of a radio controlled type for example. In the last case, remotely readable pressure gauges 7,8 can be selected, such that the control can take place from the cabin of the vehicle.

## Claims

1. Inner tyre for a wheel of a vehicle, with a tyre mounted onto a rim, in which the inner tyre can be accommodated, characterized in that the inner tyre is provided with reinforcement, such that it can at least substantially not exceed a predefined maximum volume and that under operational conditions it at least substantially does not contact the tyre.

2. Inner tyre according to claim 1, characterized in that the reinforcement comprises fibres, running radially and/or crosswise along the outer circumference of the inner tyre.

3. Inner tyre according to claim 1, characterized in that the inner tyre comprises a piece of pressure resistant tubing, the ends of which are connected to each other and/or to the rim.

4. Pressure change system for a vehicle provided with at least one wheel, comprising at least one tyre mounted onto a rim and means for adjusting a pressure in the tyre, characterized in that the means comprise an inner tyre, mounted onto the rim, a first valve for enabling a gas to deflate from the tyre and a second valve for enabling a flow of gas from the inner tyre to the tyre, that the inner tyre is provided with a reinforcement, such that it can at least substantially not exceed a predefined maximum volume and that it under operational conditions at least substantially does not contact the tyre.

5. Pressure change system according to claim 4, characterized in that the maximum volume of the inner tyre amounts to 30-70% of the internal volume of the tyre.

6. Pressure change system according to claim 4 or 5, characterized in that the pressure change system moreover comprises pump means, for pressurizing the inner tyre to a predefined pressure.

7. Pressure change system according to claim 6, characterized in that the pressure change system moreover comprises a vessel, attached to the rim, that the first valve is arranged for deflating the gas into the vessel and that the pump means are arranged for pumping the gas from the vessel into the inner tyre.

8. Pressure change system according to claim 6 or 7, characterized in that the pump means comprise a plunger pump, connected to the wheel.

9. Pressure change system according to claim 1 or 2, characterized in that at least one projection is provided, mounted near the wheel, for driving the pump means under operational conditions.

10. Wheel or inner tyre, suitable for use in a pressure change system according to one of the previous claims.
